# EUROPEAN PATENT SPECIFICATION

(11) **EP 0 622 632 B1**
(45) Date of publication and mention of the grant of the patent: **15.12.1999**
(21) Application number: 94302486.9
(22) Date of filing: 08.04.1994
(51) Int. Cl.: G01N 33/487, G01N 33/49, G01D 1/18, C12M 1/34

(54) **Apparatus for and method of testing the integrity of data signals concerning microbial growth in blood culture samples**
Vorrichtung und Verfahren zur Überprüfung der Integrität von Datensignalen betreffend Mikrobenwachstum in Blutkulturproben
Appareil et méthode pour tester l'intégrité des signaux de données, concernant la croissance microbienne dans des échantillons d'une culture de sang

(30) Priority: 30.04.1993 US 55130
(43) Date of publication of application: 02.11.1994
(73) Proprietor: Becton, Dickinson and Company, Franklin Lakes, New Jersey 07417-1880 (US)
(72) Inventor: Schaller, John W., Timonium, MD 21093-1232 (US); Gabriele, Thomas L., Timonium, MD 21093-1232 (US)
(74) Representative: Ruffles, Graham Keith

(56) References cited:
- WO-A-90/06492
- DE-A- 3 311 131
- DE-A- 3 725 128
- US-A- 5 162 229

## Description

### BACKGROUND OF THE INVENTION

### 1. Field of the Invention

The present invention relates to an apparatus for and method of testing the integrity of data signals concerning microbial growth in a fluid specimen and, more particularly, relates to testing the integrity of an instrument and the signals it generates representing the amount of microbial growth in a fluid specimen, such as blood, wherein the specimen and a culture medium are introduced into a sealable container and exposed to conditions enabling metabolic processes to take place in the presence of microorganisms.

### 2. Background Description

Usually, the presence of microorganisms such as bacteria in a patient's body fluid, particularly blood, is determined using blood culture vials. A small quantity of blood is injected through a sealing septum into a sterile vial containing a culture medium. The vial is then placed in an instrument, wherein the vial is agitated and incubated at a temperature conducive to bacterial growth, e.g., 37°C and monitored for such growth.

Known instrumental methods detect changes in the CO₂ content in the headspace of the culture vials, which is a metabolic by-product of the bacterial growth. Monitoring the CO₂ content can be accomplished by conventional methods, including radiochemical, infrared absorption at a CO₂ spectral line, or pressure/vacuum measurement. These methods, however, require invasive procedures which can result in cross-contamination between vials.

Recently, novel non-invasive monitoring methods have been developed which use sensors inside a culture vial. Such sensors often respond to changes in the CO₂ concentration by outputting an optical signal corresponding to the change in CO₂ concentration. Therefore, errors in receiving and measuring the optical signal being output by the sensor will occur, if the light sources used to excite the sensors, or the photodetectors used to monitor the optical signal, exhibit excessive noise, are interfered with by dirt, or otherwise malfunction. In addition, errors in measuring the optical signal may also be caused by vial misplacement, failure of electronic or optical components in a blood culturing instrument, or ambient light leakage into a sensing station.

If an abnormal signal variation or malfunction occurs at the sensing station or any other subsystem in the instrument, while it is measuring and recording data from a vial, it is important to reject the erroneous data and notify a system user of the malfunction as soon as possible. Therefore, data signals associated with the status of the instrument and data signals associated with the measurement of microbial growth in each blood culture sample must both be monitored and analyzed in real-time to provide such an alert indication to the user.

### SUMMARY OF THE INVENTION

The present invention overcomes the problems identified in the background material by providing an apparatus and method of directly testing the integrity of data signals associated with measuring microbial growth in blood culture samples.

A preferred embodiment of an apparatus according to the present invention includes an integrity testing module that tests the integrity of the data signals associated with measuring microbial growth in a blood culture sample contained in a vial in a sensing station of a blood culture instrument. The integrity testing module directly analyzes the data signals and, therefore, eliminates the need to isolate subsystems or subsystem combinations in the apparatus and use special indirect tests, special indirect test signal generators, and external equipment to assess the functionality of the instrument. The integrity testing module determines whether the data signals from each sensing station are within predetermined parameters and, more particularly, determines whether each data signal is stable. If the data signal from a particular sensing station is stable, a control system in the instrument is permitted to perform positivity testing using the data signals from that sensing station.

Another embodiment of an integrity testing module according to the present invention performs a "dark reading" at each sensing station, the results of which inform the control system in the instrument of ambient light leaks or other malfunctions.

In either embodiment, if a malfunction is detected by the integrity testing module an error condition is declared and the instrument's user is alerted. The alert is canceled by the control system after the user has resolved the error and so notified the control system.

Of course, in addition to the tests performed by the above embodiments, other tests can be performed by the integrity testing module, e.g., mechanical motion verification tests, inter-subsystem communication tests, and door status tests, with all of these tests being performed selectively or periodically and in serial or parallel.

These and other aspects, features and advantages of the present invention will become apparent from the following detailed description taken in conjunction with the accompanying drawings.

### DESCRIPTION OF THE DRAWINGS

Fig. 1 is a perspective view of an apparatus capable of practicing the present invention;
Fig. 2 is a perspective view of a vial used in practicing the present invention;
Fig. 3 is a block diagram of a preferred control system for the apparatus shown in Fig. 1;
Fig. 4 is a flow chart of a preferred method of operation for an apparatus according to the present invention;
Fig. 5 is a more detailed flow chart of a preferred method of determining the integrity of data signals from a sensing station; and
Fig. 6 is a more detailed flow chart of a preferred method of determining the stability of data signals from a sensing station.

### DETAILED DESCRIPTION

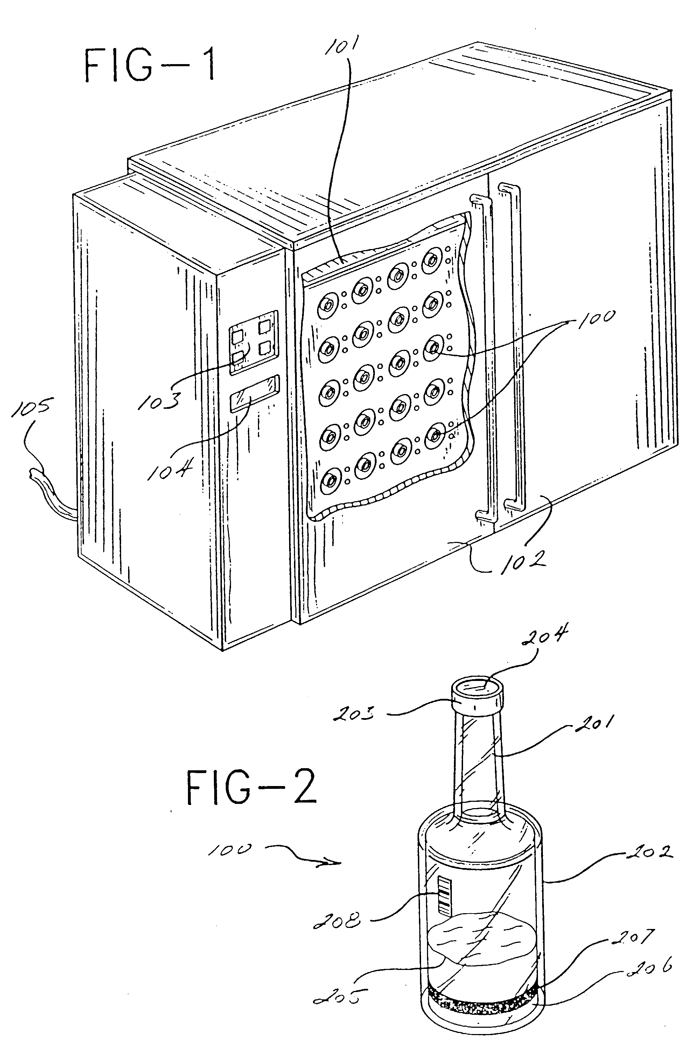

Fig. 1 is a perspective view of an apparatus capable of practicing the present invention, wherein vials 100 to be tested for biological activity are held and arranged in an X-Y matrix 101 within the apparatus. In a preferred embodiment of the apparatus, X-Y matrix 101 contains up to 240 vials and is movably mounted in the apparatus for agitating the contents of each of the vials during incubation.

Vials 100 are enclosed in the apparatus and protected from external environment and ambient light when under test by a pair of hinged doors 102 on the front of the apparatus. Heating means (not shown) are provided in the apparatus for incubating the vials in X-Y matrix 101 at a temperature conducive to metabolism of microorganisms, e.g., 37°C, when doors 102 are in a closed position. The position of doors 102 is detected by a door detector (not shown). Therefore, the apparatus provides for the simultaneous agitation and incubation of all of the vials in a closed environment, so to provide an ideal environment for the growth of bacteria within each vial. An example of a non-invasive blood culturing instrument is the BACTEC 9240®, which is sold by Becton, Dickinson and Company.

A display 104 is provided on the front of the apparatus in Fig. 1 for indicating the operational status of the apparatus, and a control panel 103 provides a plurality of switches, i.e., for manually testing the apparatus or turning the apparatus on and off. Cable 105 connects the apparatus to a control system 300, discussed below, which controls the overall operation of the apparatus.

A perspective view of a preferred vial 100 for use with the present invention is shown in Fig. 2. Vial 100 includes a neck portion 201 and a base portion 202, with neck portion 201 having a smaller diameter than base portion 202. A cap 203 seals the open upper end of neck portion 201 and includes septum 204 that permits a needle to be inserted into vial 100 for injecting a fluid specimen into vial 100 and then reseals the open end of vial 100 when the needle is withdrawn. Vial 100 is shown as including a growth medium 205, which stimulates the growth of bacteria that may be in the fluid that is injected into the vial when the vial is incubated and agitated.

In the embodiment being described, a CO₂ sensor 206 is mounted at the bottom of base portion 202 for non-invasively detecting the presence of CO₂ in vial 100. As bacteria in the fluid specimen injected through septum 204 into vial 100 grows in growth medium 205, bacteria metabolism generates CO₂. Therefore, the detection of CO₂ in vial 100 by sensor 206 indicates that bacteria are growing within vial 100. In addition, vial 100 contains an optional resin medium 207 to absorb any antibiotics or drugs that may have been injected into the vial with the specimen. An example of a vial like that shown in Fig. 2 is sold by Becton, Dickinson and Company for use in the BACTEC 9240®.

In addition, it is preferable for each vial 100 to contain a separate and distinct bar code label 208 to provide efficient tracking of each vial and minimize reporting errors.

If the fluid specimen that is injected into each vial 100 is blood, the apparatus provides a non-invasive blood culturing system that periodically and concurrently monitors, agitates and incubates the vials. Since each vial 100 contains a CO₂ sensor 206 that continuously monitors the blood culture in the vial, the blood culturing system based upon the above-described apparatus provides the earliest possible detection of bacterial growth in each vial 100. In addition, the system provides a continuous source of periodic data concerning the growth of bacteria in the blood culture in each vial 100 which can be stored and analyzed at a subsequent time.

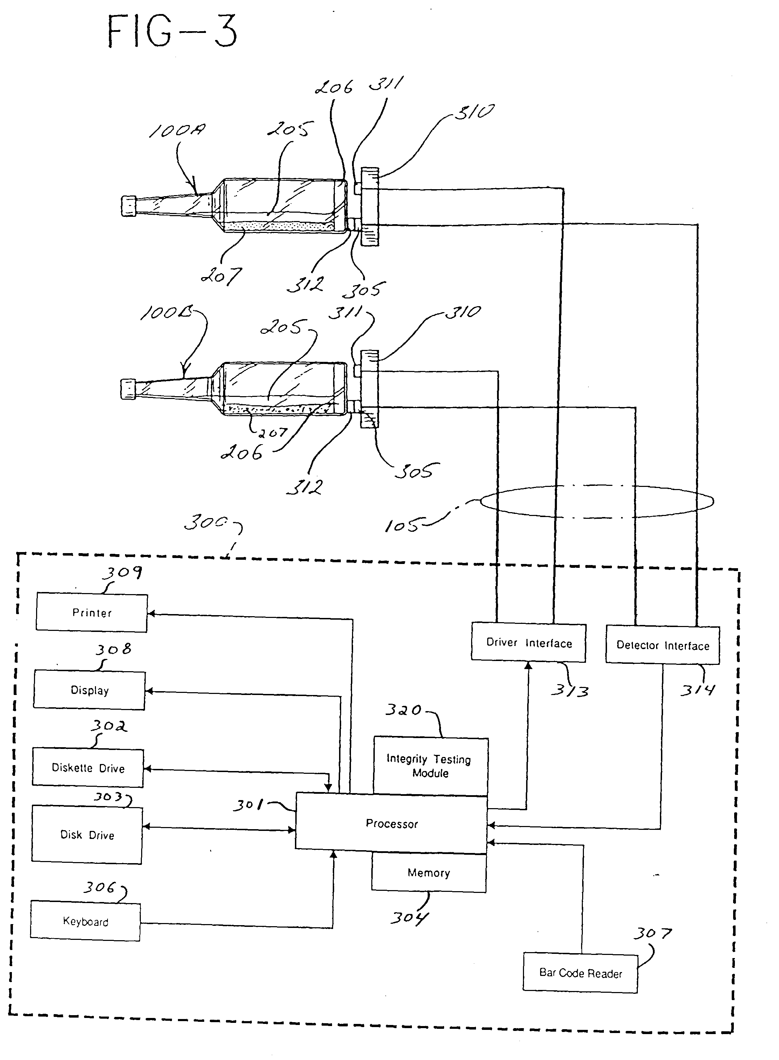

Fig. 3 shows a block diagram of an exemplary control system 300 for the apparatus shown in Fig. 1. Control system 300 includes a processor 301 that is connected to a diskette drive 302 and a disk drive 303 that are used to retrieve programs and data needed to operate and control the apparatus and store the signal data and positivity results as they are received from each sensing station 310. Both drives 302 and 303 are conventional drives, with diskette drive 302 having a removable storage medium and disk drive 303 having a non-removable storage medium with a larger storage capacity than the removable storage medium in diskette drive 302. Control system 300 also includes a memory 304 that temporarily stores programs that are currently being executed by processor 301 and data being exchanged with drives 302 and 303 or other peripheral devices, i.e., sensing stations 310.

Processor 301 provides overall control for the apparatus in Fig. 1 through cable 105 in accordance with program instructions stored in memory 304. A user selects the programs to be executed by processor 301 using a keyboard 306 or a bar code reader 307, and the results of tests being performed by the apparatus in accordance with the program and overall system status information are displayed on a display 308 or printed at printer 309 (such information can also be displayed on display 104). Bar code reader 307 is also used to read bar code 208 on each vial 100 as vial 100 is being loaded into a sensing station 310, and provide that information to processor 301 for tracking each vial 100 and its associated data signals.

As shown in Fig. 3, a sensing station 310 is associated with each vial 100A and 100B for testing each vial for the presence of CO₂ gas. Preferably, each sensing station 310 includes a light source 311, a filter 312, and a photodiode detector 305 and is controlled and monitored by processor 301 over cable 105 through a driver interface 313 and a detector interface 314.

In operation, as light is generated by light source 311 and directed towards CO₂ sensor 206 in each vial 100A and 100B, sensor 206 emanates differing quantities of light depending upon the amount of CO₂ detected by sensor 206. For example, the more CO₂ in the vial, the more light is received from sensor 206. The emitted light passes through filter 312 and is received by detector 305, which then transmits signal data concerning the level of light being received to detector interface 314. It should be understood, of course, that the use of a CO₂ sensor is not required to practice the present invention, since other non-invasive means could be used to detect CO₂ within vial 100A and 100B, e.g., a scattered photon migration (SPM) technique.

Processor 301 drives each light source 311 through driver interface 313 and then samples the signal data being received by detectors 305 at detector interface 314. Based upon the information received from detector interface 314, in response to the light being generated by a corresponding light source 311, processor 301 determines the relative amount of CO₂ in each vial 100A and 100B and stores the results of these tests in memory 304 or on drives 302 and 303. In addition, processor 301 selects which sensing station 310 is to be used and, therefore, can perform tests using sensing stations 310 either sequentially or in parallel.

It is to be understood that control system 300, shown in Fig. 3 and discussed above, is simply illustrative and could be structured differently and still remain within the scope of the present invention. For example, processor 301, memory 304, display 308 and interfaces 313 and 314 could be completely or partially contained within the apparatus with sensing stations 310 as shown in Fig. 1, rather than in control system 300 as shown in Fig. 3.

Each CO₂ measurement data signal output from detector interface 314 to processor 301 is then processed by an integrity testing module 320 that is connected to or associated with processor 301. Integrity testing module 320 directly analyzes each output signal from each sensing station 310 within the apparatus to detect any malfunctions in sensing station 310 or irregularities in the data signals being received from each sensing station 310. Directly analyzing the data signals from each sensing station 310, eliminates the need to isolate subsystems or subsystem combinations in the apparatus and use special indirect tests, special indirect test signal generators, and external equipment to assess the functionality of the apparatus. In addition, tile direct testing provided by the present invention is performed automatically by integrity testing module 320 as each data signal is received from detector interface 314 during normal operation of the apparatus, therefore, down time is minimized.

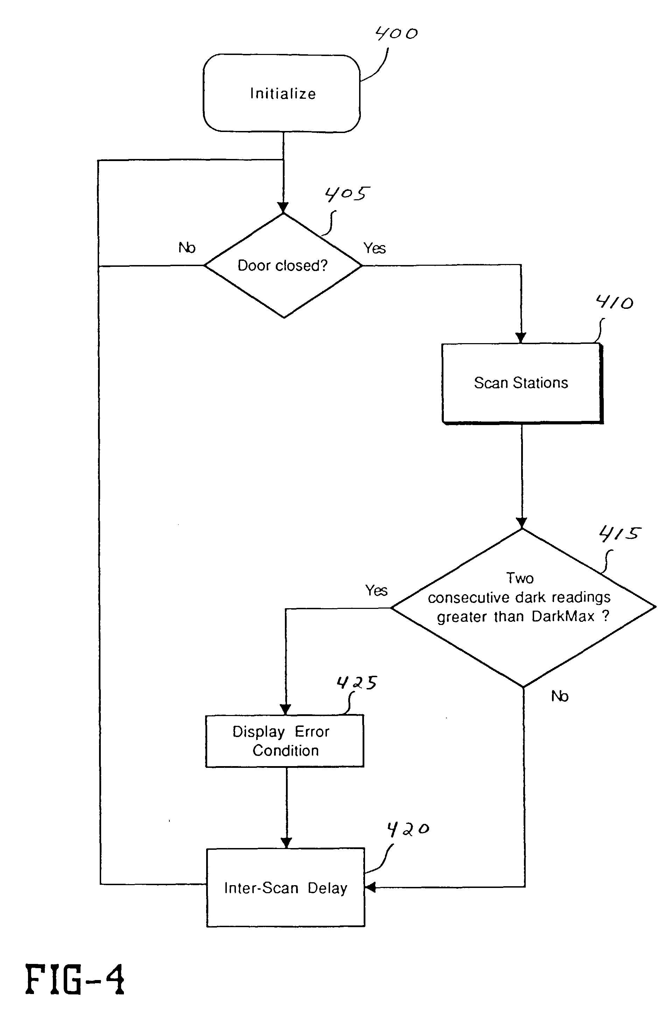

Integrity testing module 320 has been designed to accept the most extreme signal variations that may be received from detector interface 314 during normal operation and does not generate malfunction alerts if the data signal is acceptable. However, integrity testing module 320 is designed to reject data having variations that are abnormal and indicate subsystem malfunction. When integrity testing module 320 detects such a malfunction, it sends an error condition alert to processor 301, which outputs an error message to displays 308 and/or 104 to alert the user of the malfunction. The detailed operation of integrity testing module 320 is described below with reference to the flow charts in Figs. 4-6.

Fig. 4 is a flow chart of a preferred method of operation for integrity testing module 320 as it analyzes the integrity of data signals from sensing station 310 in the apparatus shown in Figs. 1-3 in accordance with the present invention.

When the apparatus is powered-on at step 400, various initialization routines are performed by processor 301 to reset all the subsystems in the apparatus. After processor 301 has reset the apparatus, control system 300 monitors whether doors 102 on the front of the apparatus have been closed in step 405. If doors 102 are not closed, control system 300 continues to monitor the status of doors 102 and routinely performs other tasks and tests, e.g., aiding the user in loading new vials 100 into the apparatus for testing, mechanical motion verification tests, intersubsystem communication tests, and door status tests, with all of these tests being performed selectively or periodically and in serial or parallel. When loading new vials, the user scans bar code 208 on each new vial and inserts the scanned vial into a sensing station indicated by processor 301. After all of the vials to be tested have been loaded, the user closes doors 102 and the scanning of sensing stations is initiated in step 410.

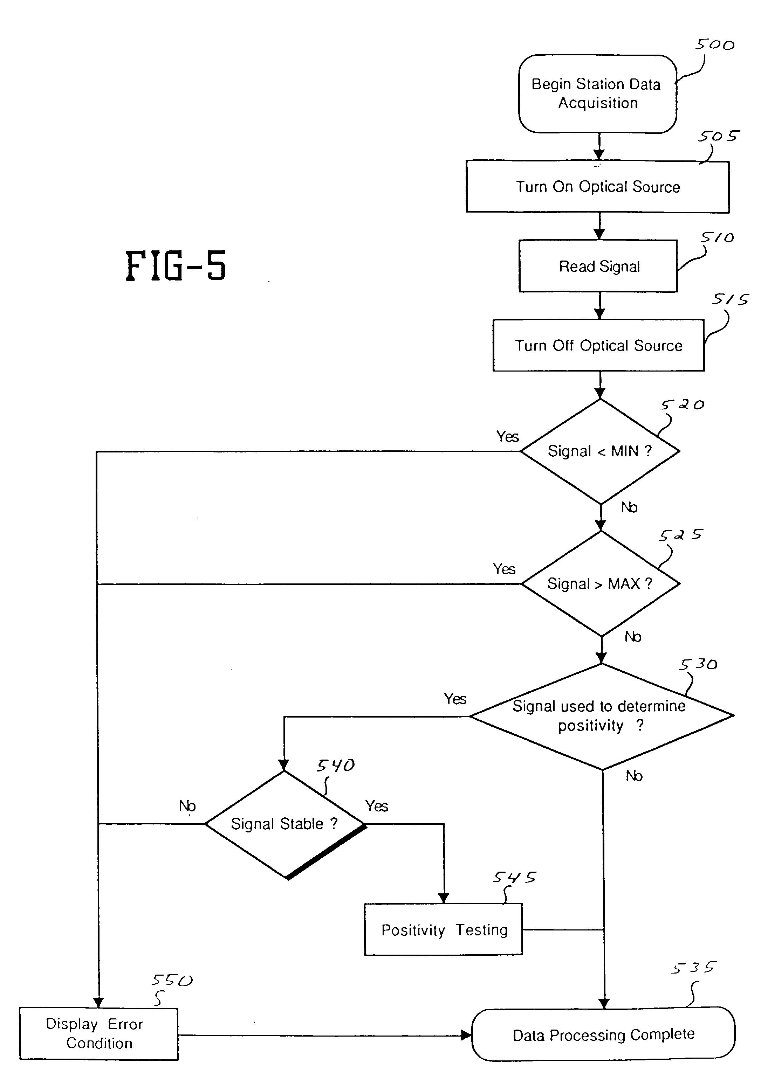

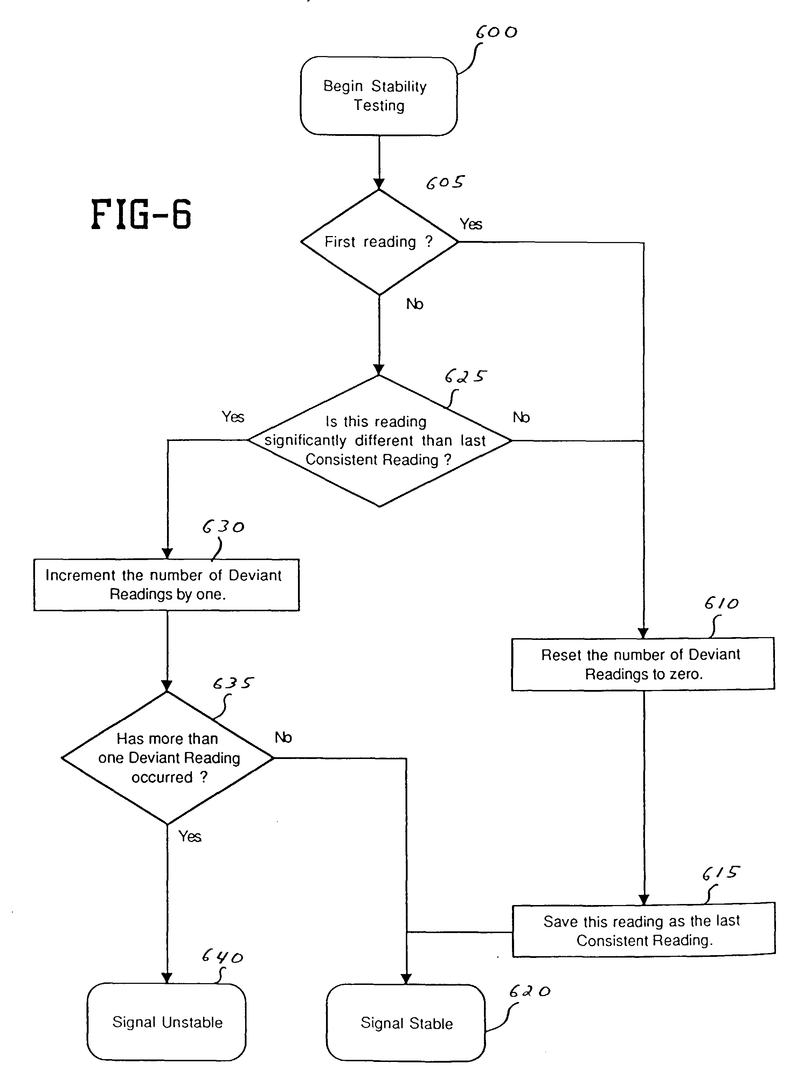

The operation of scanning the sensing stations in step 410 is automatically performed by integrity testing module 320 when doors 102 are closed. Figs. 5 and 6, described below, show the details of the scanning operation. In step 415, after each sensing station has been scanned, integrity testing module 320 determines whether two consecutive "dark reading" values with values greater than DarkMax have been detected. A "dark reading" is a single sample of a data signal received from a sensing station 310 when all light sources 311 in the apparatus are off. The "dark readings" processed by integrity testing module 320 have also been prefiltered to enhance signal-to-noise ratios. DarkMax is defined as a predetermined maximum signal level that is greater than a factory specified noise level for a sensing station 310 and less than a predetermined vial presence signal level that is generated by a sensing station 310 when it contains a vial. DarkMax is set at a predetermined signal level such that, if a "dark reading" from a specific sensing station 310 has exceeded DarkMax, integrity testing module 320 knows that that specific sensing station 310 has malfunctioned or is detecting too much ambient or unknown light.

More particularly, integrity testing module 320 in Fig. 3 determines whether two consecutive "dark reading" values have been detected with values greater than DarkMax, e.g., 0.1V, wherein the predetermined vial presence voltage level is 0.2V. If two consecutive "dark readings" greater than DarkMax have been detected by integrity testing module 320, an error condition indicating the failure of the sensing station 310 being tested is displayed in step 425 by processor 301 on display 308 and removed from service. When the above-identified malfunction has been corrected by the user, the affected sensing station 310 is reactivated by the user entering a command on keyboard 306.

Whether or not two consecutive "dark readings" greater than DarkMax have been detected in step 415, processor 301 performs an inter-scan delay at step 420 which prevents integrity testing module 320 from performing additional tests for a predetermined period of time. For example, the inter-scan delay in step 420 for the apparatus shown in Figs. 1-3 is set so that a complete testing cycle is performed by integrity testing module 320 every 10 minutes. Of course, other time periods could be used and still remain within the scope of the present invention. After the inter-scan delay in step 420 is completed, step 405 is performed and control system 300 again determines whether doors 102 are closed before proceeding to the sensing station testing operation in step 410.

Fig. 5 is a flow chart that shows the details of an exemplary testing operation, step 410, for a single sensing station 310 according to the present invention. In step 500, data acquisition by integrity testing module 320 is initiated and, in step 505, light source 311 for sensing station 310 is turned on by processor 301 through driver interface 313. After light source 311 has been turned on, data signals corresponding to the optical information being received by detector 305 in sensing station 310 from sensor 206 are received by detector interface 314 and transferred to processor 301. Processor 301 then records a "data signal" received from sensing station 310 and may perform a variety of conditioning operations on the "data signal," e.g., signal-to-noise ratio filtering and environmental effect compensation.

After the data signal has been received, prefiltered and stored by processor 301, light source 311 is shut off in step 515 by processor 301 through driver interface 313 and the data signal is analyzed in step 520 by integrity testing module 320 using an occupied station test. The occupied station test in step 520, verifies that the data signal obtained by sensing station 310 meets minimum criteria, i.e., Signal ≥ MIN, for sample acquisition and monitoring when light source 311 is on and vial 100 is in sensing station 310. MIN in the present example is set at 0.2V, which is equal to the predetermined vial presence voltage level, however, other values could also be used. If the data signal value is less than MIN, integrity testing module 320 notifies processor 301 of the error condition and the error condition is displayed on display 308 in step 550. Processing then passes to step 535 and returns to step 410 in Fig. 4 to continue testing the remaining sensing stations 310.

In step 520, if the data signal value is greater than MIN, integrity testing module 320 begins analyzing the data signal in step 525 using an amplifier saturation test. The amplifier saturation test in step 525, verifies that the data signal obtained by sensing station 310 is within the dynamic range of control system 300, i.e., Signal ≤ MAX, for sample acquisition and monitoring when light source 311 is on and vial 100 in sensing station 310. MAX in the present example is set at 2.4V, which is less than the maximum signal output of detector interface 314 and greater than predetermined normal data signal readings. It should be understood, of course, that MAX can have any value within this range. If the data signal value is greater than MAX, integrity testing module 320 notifies processor 301 of the error condition and the error condition is displayed on display 308 in step 550. Processing then passes to step 535 and returns to step 410 in Fig. 4 to continue testing the remaining sensing stations 310.

In step 525, if the data signal value is less than MAX, integrity testing module 320 determines whether processor 301 intends to perform positivity testing on the data signal in step 530. If positivity testing is not to be performed, flow passes to step 535 and returns to step 410 in Fig. 4 to continue testing the remaining sensing stations 310. However, if positivity testing is to be performed by processor 301 on the current data signal, flow passes to step 540, wherein the stability of the data signal from sensing station 310 is determined. Determination of data signal and sensing station stability can be performed using a variety of methods, e.g., by calculating and thresholding variation statistics including range, variance, standard deviation and coefficient of variation for consecutive data signals or by calculating and thresholding the residual error from linear or nonlinear regression of consecutive data signals. An example of a preferred method of testing sensing station stability is described in detail below with reference to Fig. 6.

In step 540, if the data signal from sensing station 310 is stable, integrity testing module 320 permits processor 301 to perform positivity testing on the data signal in step 545, flow passes to step 535 and then returns to step 410 in Fig. 4 to continue testing the remaining sensing stations 310. However, if the data signal from sensing station 310 is not stable, integrity testing module 320 notifies processor 301 of the error condition and the error condition is displayed on display 308 in step 550. Processing then passes to step 535 and returns to step 410 in Fig. 4 to continue testing the remaining sensing stations 310.

Fig. 6 is a flow chart showing the details of an exemplary stability testing operation, step 540 in Fig. 5, for determining the stability of data signals being received from a sensing station 310 according to the present invention. The stability testing operation requires that consecutive data signal readings be consistent, and indicates instability in sensing station 310 if two consecutive data signal readings are deviant or inconsistent from previously consistent or stable readings.

Sensing station stability testing begins in step 600 and in step 605 a determination is made as to whether the current data signal reading is the first reading. If it is the first data signal reading, flow passes to step 610, wherein a variable called Deviant Readings is reset to zero to indicate that there have been no deviant data signals. The first data signal reading is then stored in memory 304 as the last Consistent Reading and integrity testing module 320 indicates to processor 301, in step 620, that the first data signal reading was stable so to properly exit step 540 in Fig. 5. However, if the current data signal reading is not the first data signal reading, integrity testing module 320 determines whether the current reading is significantly different (varies positively or negatively by more than a predetermined percentage, e.g., 20%) from the last Consistent Reading stored in memory 304. If the current reading is not significantly different from the last Consistent Reading, Deviant Readings is reset to zero to indicate that there have been no deviant data signals, the current reading is stored in memory 304 as the last Consistent Reading, and integrity testing module 320 indicates to processor 301, in step 620, that the current reading was stable so to properly exit step 540 in Fig. 5.

In step 625, if the current reading is significantly different from the last Consistent Reading, integrity testing module 320 increments Deviant Readings by one in step 630 and determines whether Deviant Readings is greater than one (i.e., Has more than one consecutive deviant data signal reading occurred at this particular sensing station?). If Deviant Readings is not greater than one, integrity testing module 320 notifies processor 301 that the current reading is considered stable in step 620. However, if Deviant Readings is greater than one, integrity testing module 320 notifies processor 301 that the current reading was unstable in step 640. In either case, flow then passes to step 540 in Fig. 5 and if the data signals received from sensing station 310 have been determined to be unstable, integrity testing module 320 notifies processor 301 of the error condition and the error condition is displayed on display 308 in step 550.

During each testing cycle, integrity testing module 320 provides all of the testing results to processor 301 for storage in an error log file on disk drive 303 or diskette drive 302 and for display on display 308. Of course, it should be understood that the error condition can also be displayed on the front of the apparatus on display 104 or by flashing a sensing station identifier near the failed sensing station. When the above-identified malfunction has been corrected by the user, the affected sensing station 310 is reactivated by the user entering a command on keyboard 306.

Therefore, it should be understood that one of the objectives of the present invention is to continually verify that the data signals from each sensing station are within design limits, both when the sensing station is loaded with a vial and when the sensing station is empty. An additional objective of the present invention is to continually verify that data signals from each sensing station occupied by a vial are stable. Therefore, the stability and quality of the data signal values used to determine blood culture positivity are directly verified. In addition, the present invention provides testing robustness, timeliness and efficiency, since it is sensitive to failure mechanisms that can significantly corrupt the data signal, reports malfunctions to the user immediately, and does not require the generation of special test signals or the substitution of special test inputs which would interrupt normal instrument operation.

In the foregoing discussion, it is also to be understood that the above-described embodiments are simply illustrative of an apparatus for and method of testing the integrity of data signals concerning microbial growth in a fluid specimen, and that other suitable variations and modifications could be made to these embodiments and still remain within the scope of the present invention.

## Claims

1. An apparatus for testing the integrity of a sensing station (310) used to determine the amount of microbial growth in a fluid specimen contained in a vial (100) located at the sensing station, said apparatus comprising:
a driver (313) for activating the sensing station to detect microbial growth in the vial and generate a data signal;
a detector (314) for receiving the data signal from the activated sensing station;
means (320) for determining whether the data signal received by said detector is within a predetermined design criteria; and
a display (104, 308) for displaying the results of said determination means.

2. An apparatus according to Claim 1, wherein said means for determining whether the data signal received by said detector is within said predetermined design criteria comprises:
means (520) for determining whether the data signal is greater than a predetermined minimum value needed for acquisition and monitoring; and
means (525) for determining whether the data signal is less than a predetermined maximum value expected for normal data signals.

3. An apparatus according to Claim 1, wherein said means for determining whether the data signal received by said detector is within said predetermined design criteria comprises:
means (540) determining whether the data signal is stable.

4. An apparatus according to Claim 3, wherein said means for determining whether the data signal is stable comprises:
means (304, 615) for storing a last received consistent data signal from the activated sensing station;
means (625) for identifying the current data signal as deviant if it differs by more than a predetermined percentage from said last received consistent data signal;
means (630) for counting a number of consecutive deviant data signals received from the activated sensing station;
means (635) for judging whether the number of consecutive deviant data signals received from the activated sensing station exceeds a predetermined amount; and
means (640, 550) for instructing said display means to display an error condition if said judging means determines that the number of consecutive deviant data signals received from the activated sensing station exceeds the predetermined amount.

5. An apparatus according to Claim 4, wherein said last received consistent data signal is initialized by storing a first data signal received from the activated sensing station as said last received consistent data signal.

6. An apparatus according to Claim 4, wherein said last received consistent data signal storing means stores the current data signal received from the activated sensing station as said last received consistent data signal, if the current data signal is not deviant.

7. An apparatus according to Claim 3, wherein said means for determining whether the data signal is stable comprises:
means (301) for calculating and thresholding variation statistics including range, variance, standard deviation and coefficient of variation for consecutive data signals received from the activated sensing station.

8. An apparatus according to Claim 3, wherein said means for determining whether the data signal is stable comprises:
means (301) for calculating and thresholding residual error from a linear/non-linear regression of consecutive data signals received from the activated sensing station.

9. An apparatus according to Claim 1, further comprising:
means (530) for instructing the apparatus to perform stability testing on the data signal when the data signal is to be used for positivity testing.

10. An apparatus according to Claim 1, wherein said means for determining whether the data signal received by said detector is within said predetermined design criteria comprises:
means (415) for determining whether two consecutive data signals from the sensing station are greater than a predetermined maximum dark value, when the sensing station is not activated.

## Patentansprüche

1. Vorrichtung zur Überprüfung der Integrität einer Erfassungsstation (310), die verwendet wird, um die Größe des Mikrobenwachstums in einer Fluidprobe zu bestimmen, die in einem Glasfläschchen (100) enthalten ist, das in der Erfassungsstation angeordnet ist, wobei die Vorrichtung aufweist:
einen Treiber (313) zur Aktivierung der Erfassungsstation, um Mikrobenwachstum in dem Glasfläschchen zu ermitteln und ein Datensignal zu erzeugen;
einen Detektor (314) zum Empfangen der Datensignale von der aktivierten Erfassungsstation;
eine Einrichtung (320) zum Bestimmen, ob das von dem Detektor empfangene Datensignal innerhalb eines vorbestimmten Musterkriteriums liegt; und
eine Anzeige (104, 308) zum Anzeigen der Ergebnisse der Bestimmungseinrichtung.

2. Vorrichtung nach Anspruch 1, wobei die Einrichtung zum Bestimmen, ob das vom Detektor empfangene Datensignal innerhalb des vorbestimmten Musterkriteriums liegt, aufweist:
eine Einrichtung (520) zum Bestimmen, ob das Datensignal größer ist als ein vorbestimmter Mindestwert, der zum Erfassen und Überwachen notwendig ist; und
eine Einrichtung (525) zum Bestimmen, ob das Datensignal kleiner ist als ein vorbestimmter Höchstwert, der für normale Datensignale erwartet wird.

3. Vorrichtung nach Anspruch 1, wobei die Einrichtung zum Bestimmen, ob das von dem Detektor empfangene Datensignal innerhalb des vorbestimmten Musterkriteriums liegt, aufweist:
eine Einrichtung (540) zum Bestimmen, ob das Datensignal stabil ist.

4. Vorrichtung nach Anspruch 3, wobei die Einrichtung zum Bestimmen, ob das Datensignal stabil ist, aufweist:
eine Einrichtung (304, 615) zum Speichern eines zuletzt empfangenen beständigen Datensignals von der aktivierten Erfassungsstation;
eine Einrichtung (625) zum Identifizieren des aktuellen Datensignals als abweichend, wenn es um mehr als einen vorbestimmten Prozentsatz von dem zuletzt empfangenen beständigen Datensignal abweicht;
eine Einrichtung (360) zum Zählen einer Anzahl aufeinanderfolgender abweichender Datensignale, die von der aktivierten Erfassungsstation kommend empfangen werden;
eine Einrichtung (635) zum Beurteilen, ob die Anzahl der aufeinanderfolgenden abweichenden Datensignale, die von der aktivierten Erfassungsstation kommend empfangen werden, einen vorbestimmten Betrag überschreitet; und
eine Einrichtung (640, 550) zum Anweisen der Anzeigeeinrichtung, einen Fehlerzustand anzuzeigen, wenn die Beurteilungseinrichtung bestimmt, daß die Anzahl der aufeinanderfolgenden abweichenden Datensignale, die von der aktivierten Erfassungsstation kommend empfangen werden, den vorbestimmten Betrag überschreitet.

5. Vorrichtung nach Anspruch 4, wobei das zuletzt empfangene beständige Datensignal auf seinen Anfangswert gesetzt wird, indem ein erstes Datensignal, das von der aktivierten Erfassungsstation kommend empfangen wird, als das zuletzt empfangene beständige Datensignal gespeichert wird.

6. Vorrichtung nach Anspruch 4, wobei die Speichereinrichtung des zuletzt empfangenen beständigen Datensignals das aktuelle Datensignal, das von der aktivierten Erfassungsstation kommend empfangen wird, als das zuletzt empfangene beständige Datensignal speichert, wenn das aktuelle Datensignal nicht abweichend ist.

7. Vorrichtung nach Anspruch 3, wobei die Einrichtung zum Bestimmen, ob das Datensignal stabil ist, aufweist:
eine Einrichtung (301) zum Berechnen und zur Schwellwertbestimmung von Variationsstatistiken, einschließlich Bereich, Varianz, Standardabweichung und Variationskoeffizient, für aufeinanderfolgende Datensignale, die von der aktivierten Erfassungsstation kommend empfangen werden.

8. Vorrichtung nach Anspruch 3, wobei die Einrichtung zum Bestimmen, ob das Datensignal stabil ist, aufweist:
eine Einrichtung (301) zum Berechnen und zur Schwellwertbestimmung eines Restfehlers aus einer linearen/nichtlinearen Regression von aufeinanderfolgenden Dötensignalen, die von der aktivierten Erfassungsstation kommend empfangen werden.

9. Vorrichtung nach Anspruch 1, ferner mit:
einer Einrichtung (530) zum Anweisen der Vorrichtung, eine Stabilitätsüberprüfung mit dem Datensignal durchzuführen, wenn das Datensignal für Positivitätsüberprüfung zu verwenden ist.

10. Vorrichtung nach Anspruch 1, wobei die Einrichtung zum Bestimmen, ob das von dem Detektor empfangene Datensignal innerhalb des vorbestimmten Musterkriteriums liegt, aufweist:
eine Einrichtung (415) zum Bestimmen, ob zwei aufeinanderfolgenden Datensignale von der Erfassungsstation größer sind als ein vorbestimmter höchster Dunkelwert, wenn die Erfassungsstation nicht aktiviert ist.

## Revendications

1. Un appareil pour tester l'intégrité d'une station de détection (310) utilisée pour déterminer le niveau de croissance microbienne dans un échantillon de fluide contenu dans un flacon (100) placé à la station de détection, cet appareil comprenant:
un activateur (313) pour activer la station de détection pour détecter une croissance microbienne dans le flacon et produire un signal de données;
un détecteur (314) pour recevoir le signal de données provenant de la station de détection activée;
des moyens (320) pour déterminer si le signal de données qui est reçu par le détecteur satisfait à des critères de conception prédéterminés; et
une visualisation (104, 308) pour visualiser les résultats des moyens de détermination.

2. Un appareil selon la revendication 1, dans lequel les moyens pour déterminer si le signal de données reçu par le détecteur satisfait aux critères de conception prédéterminés comprennent:
des moyens (520) pour déterminer si le signal de données est supérieur à une valeur minimale prédéterminée nécessaire pour l'acquisition et la surveillance; et
des moyens (525) pour déterminer si le signal de données est inférieur à une valeur maximale prédéterminée prévue pour des signaux de données normaux.

3. Un appareil selon la revendication 1, dans lequel les moyens pour déterminer si le signal de données reçu par le détecteur satisfait aux critères de conception prédéterminés comprennent:
des moyens (540) pour déterminer si le signal de données est stable.

4. Un appareil selon la revendication 3, dans lequel les moyens pour déterminer si le signal de données est stable comprennent:
des moyens (304, 615) pour enregistrer un signal de données cohérent reçu en dernier, provenant de la station de détection activée;
des moyens (625) pour identifier le signal de données présent comme étant déviant s'il diffère de plus d'un pourcentage prédéterminé par rapport au signal de données cohérent reçu en dernier;
des moyens (630) pour compter un nombre de signaux de données déviants consécutifs reçus à partir de la station de détection activée;
des moyens (635) pour déterminer si le nombre de signaux de données déviants consécutifs reçus à partir de la station de données activée dépasse une quantité prédéterminée; et
des moyens (640, 550) pour ordonner aux moyens de visualisation de visualiser une condition d'erreur si les moyens de détermination déterminent que le nombre de signaux de données déviants consécutifs reçus à partir de la station de détection activée dépasse la quantité prédéterminée.

5. Un appareil selon la revendication 4, dans lequel le signal de données cohérent reçu en dernier est initialisé en enregistrant pour le signal de données cohérent reçu en dernier un premier signal de données reçu à partir de la station de détection activée.

6. Un appareil selon la revendication 4, dans lequel les moyens d'enregistrement du signal de données cohérent reçu en dernier conservent le signal de données présent reçu à partir de la station de détection activée, pour le signal de données cohérent reçu en dernier, si le signal de données présent n'est pas déviant.

7. Un appareil selon la revendication 3, dans lequel les moyens pour déterminer si le signal de données est stable comprennent:
des moyens (301) pour calculer une information statistique de variation, et pour lui appliquer un seuil, cette information comprenant la plage, la variance, l'écart-type et le coefficient de variation pour des signaux de données consécutifs reçus à partir de la station de détection activée.

8. Un appareil selon la revendication 3, dans lequel les moyens pour déterminer si le signal de données est stable comprennent:
des moyens (301) pour calculer une erreur résiduelle par rapport à une régression linéaire/non linéaire de signaux de données consécutifs reçus à partir de la station de détection activée, et pour appliquer un seuil à cette erreur.

9. Un appareil selon la revendication 1, comprenant en outre:
des moyens (530) pour commander à l'appareil d'effectuer un test de stabilité sur le signal de données lorsque le signal de données doit être utilisé pour un test de positivité.

10. Un appareil selon la revendication 1, dans lequel les moyens pour déterminer si le signal de données reçu par le détecteur satisfait aux critères de conception prédéterminés comprennent:
des moyens (415) pour déterminer si deux signaux de données consécutifs provenant de la station de détection sont supérieurs à une valeur d'obscurité maximale prédéterminée, lorsque la station de détection n'est pas activée.
